# EUROPEAN PATENT APPLICATION

(11) **EP 3 125 049 A1**
(43) Date of publication of application: **01.02.2017**
(21) Application number: 15179150.6
(22) Date of filing: 30.07.2015
(51) Int. Cl.: G03G 21/04, H04N 1/00

(54) **IMAGE PROCESSING APPARATUS AND IMAGE PROCESSING METHOD**

(71) Applicant: Kabushiki Kaisha Toshiba, Tokyo 105-8001 (JP); Toshiba TEC Kabushiki Kaisha, Tokyo 141-0032 (JP)
(72) Inventor: KUNUGI, Hiroyuki, Shinagawa-ku, Tokyo 141-0032 (JP)
(74) Representative: Takeuchi, Maya

(57) **Abstract**

An image processing apparatus comprises a camera, a reading unit, a memory unit and a control unit. The camera takes the image of a part of or the whole body of a user to generate image data of the user. The reading unit reads the image on a sheet to generate image data for the sheet. The control unit determines, according to the image data of the sheet and specific image data, whether or not the sheet read by the reading unit is a sheet the image of which is prohibited to be read and stores the image data of the sheet and the image data of the user in the memory unit after determining that the sheet is a sheet the image of which is prohibited to be read.

## Description

### FIELD

Embodiments described herein relate to an image processing apparatus and an image processing method.

### BACKGROUND

A technology of reading an image formed on a sheet-shaped medium (hereinafter referred to as a 'sheet') such as paper is known. In the past, a technology of copying a sheet prohibited to be copied, for example, a banknote, a check or a merchandise coupon, was used in some cases. Further, sometimes, a sheet which is prohibited to be copied because of confidentiality, for example, a confidential file, is copied in an enterprise.

To deal with this problem, a technology is provided which determines whether or not a sheet of print object is a sheet prohibited to be copied when the sheet is to be printed. However, in related technologies, even if a prohibited action can be detected, the user performing the prohibited action cannot be determined.

### DESCRIPTION OF THE DRAWINGS

Fig. 1 is a diagram exemplifying the appearance of an image forming apparatus 1 equipped with an image processing apparatus 100 according to embodiment 1;
Fig. 2 is a diagram exemplifying the functional structure of an image forming apparatus 1 equipped with an image processing apparatus 100 according to embodiment 1;
Fig. 3 is a flowchart exemplifying a part of the flow of the actions of an image processing apparatus 100 according to embodiment 1;
Fig. 4 is a flowchart exemplifying a part of the flow of the actions of an image processing apparatus 100 according to embodiment 1;
Fig. 5 is a flowchart exemplifying a part of the flow of the actions of an image processing apparatus 100 according to embodiment 2;
Fig. 6 is a flowchart exemplifying a part of the flow of the actions of an image processing apparatus 100 according to embodiment 2;
Fig. 7 is a diagram illustrating a part of function limitations based on attributes of each user;
Fig. 8 is a diagram exemplifying the function limitations imposed in the case where similarity is classified into three levels; and
Fig. 9 is a diagram exemplifying the levels of alarm information in the case where similarity is classified into three levels.

### DETAILED DESCRIPTION

In order to resolve the above problems, there is provided an image forming apparatus comprises a camera, a reading unit, a memory unit and a control unit. The camera takes the image of a part or the whole body of a user to generate image data of the user. The reading unit reads the image on a sheet to generate image data for the sheet. The control unit determines, according to the image data of the sheet and specific image data, whether or not the sheet read by the reading unit is a sheet the image of which is prohibited to be read and stores the image data of the sheet and the image data of the user in the memory unit after determining that the sheet is a sheet the image of which is prohibited to be read.

The control unit may output information indicating that the sheet is a sheet the image of which is prohibited to be read after determining that the sheet read by the reading unit is a sheet the image of which is prohibited to be read.

The control unit may determine, according to the image data of the users included in user registration information related to predetermined users and the image data of the user, whether or not the user photographed by the camera is a user included in the user registration information. After determining that the user photographed by the camera is a user included in the user registration information, the control unit may carry out a control to store the image data of a sheet determined to be a sheet the image of which is prohibited to be read and the user registration information in the memory unit.

The user registration information may include the image data of the user generated by photographing a part of or the whole body of the user and information representing attributes of the user.

After determining that the sheet read by the reading unit is a sheet the image of which is prohibited to be read, the control unit may output information indicating that the sheet is a sheet the image of which is prohibited to be read according to information representing the attributes of the user included in the user registration information.

The control unit may delete the image data of the user and the image data of the sheet after determining that the sheet is not a sheet the image of which is prohibited to be read.

The image forming apparatus may further comprise an image forming unit configured to extract features from the image data of the sheet, compare the extracted features with the features pre-extracted from the specific image data and calculate the similarity of the image data of the sheet and the specific image data.

The control unit may determine whether or not the sheet is a sheet the image of which is prohibited to be read according to the similarity calculated by the image processing unit.

The control unit may encrypt the memory unit in which the image data of a sheet determined to be a sheet the image of which is prohibited to be read and the image data of the user are stored.

The control unit may carry out a control to encrypt the image data of a sheet determined to be a sheet the image of which is prohibited to be read and the image data of the user and store the image data of the sheet and the image data of the user in the memory unit.

The present invention further relates to an image processing method, comprising: taking an image of a part of or the whole body of a user to generate image data of the user; reading the image of a sheet and generate image data of the sheet; determining, according to the image data of the sheet and specific image data, whether or not the sheet read at the reading step is a sheet the image of which is prohibited to be read; and storing the image data of the sheet and the image data of the user after determining that the sheet is a sheet the image of which is prohibited to be read.

The image processing method may comprise outputting information indicating that the sheet is a sheet the image of which is prohibited to be read after determining that the sheet read at the reading step is a sheet the image of which is prohibited to be read.

The image processing method may comprise determining, according to the image data of the users included in user registration information related to predetermined users and the image data of the user, whether or not the user photographed by the camera is a user included in the user registration information; and
after determining that the photographed user is a user included in the user registration information, carrying out a control to store the image data of a sheet determined to be a sheet the image of which is prohibited to be read and the user registration information.

The user registration information may include the image data of the user generated by photographing a part of or the whole body of the user and information representing attributes of the user; and after determining that the sheet read at the reading step is a sheet the image of which is prohibited to be read, outputting information indicating that the sheet is a sheet the image of which is prohibited to be read according to information representing the attributes of the user included in the user registration information.

The image processing method may comprise deleting the image data of the user and the image data of the sheet after determining that the sheet is not a sheet the image of which is prohibited to be read.

The image processing method may comprise extracting features from the image data of the sheet; comparing the extracted features with the features pre-extracted from the specific image data; calculating the similarity of the image data of the sheet and the specific image data; and determining whether or not the sheet is a sheet the image of which is prohibited to be read according to the similarity calculated at the calculating step.

The method may further comprise encrypting the image data of a sheet determined to be a sheet the image of which is prohibited to be read and the image data of the user.

The method may further comprise: carrying out a control to encrypt the image data of a sheet determined to be a sheet the image of which is prohibited to be read and the image data of the user and store the image data of the sheet and the image data of the user.

The present invention further relates to an image processing method, wherein a computer controls: a camera configured to take the image of a part of or the whole body of a user to generate image data of the user; a reading unit configured to read the image of a sheet to generate image data of the sheet; and a memory unit; and the computer determines, according to the image data of the sheet and specific image data, whether or not the sheet read by the reading unit is a sheet the image of which is prohibited to be read and stores the image data of the sheet and the image data of the user in the memory unit after determining that the sheet is a sheet the image of which is prohibited to be read.

The image forming apparatus and the image processing method of the present invention are described below with reference to accompanying drawings.

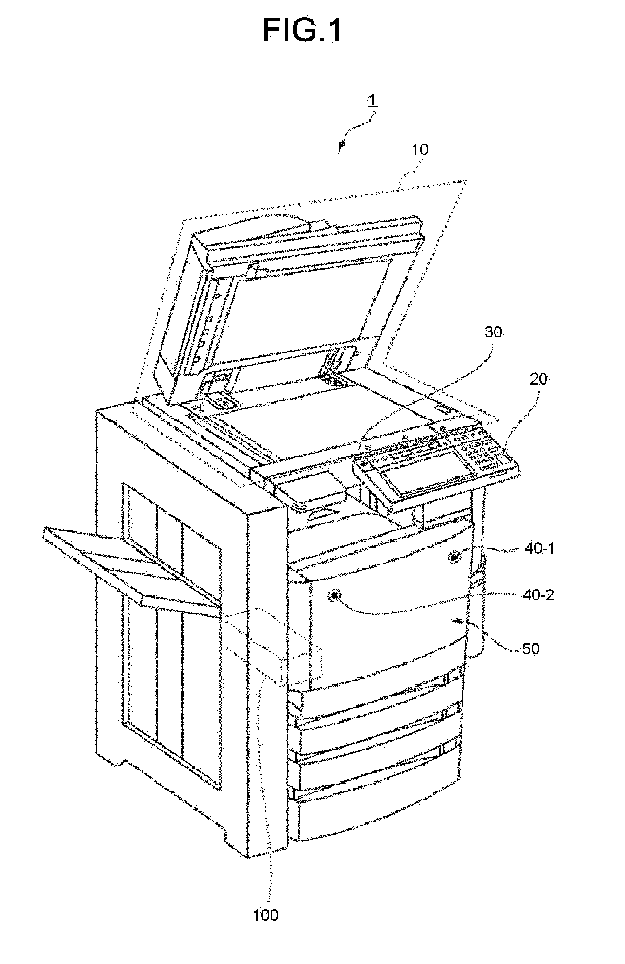

Fig. 1 is a diagram exemplifying the appearance of an image forming apparatus 1 equipped with an image processing apparatus 100 according to embodiment 1.

The image forming apparatus 1 is, for example, a Multi-Function Peripheral (MFP) capable of forming an image on a sheet. For example, the image forming apparatus 1 has a print function, a copy function, a scan function or a fax function. For example, the sheet is paper on which an original, words and images can be formed. The sheet can be any object on which an image can be formed by the image forming apparatus 1. The sheet may also be fabric or the printing surface of the disc of an electronic recording medium such as a CD-ROM.

The image forming apparatus 1 comprises an image reading unit 10, a control panel 20, a camera 30, human sensors 40-1 and 40-2, an image forming unit 50 and an image processing apparatus 100.

The image reading unit 10 reads, using an optical scanning system, an image from a sheet placed at a specific position. For example, the optical scanning system includes an image pickup element such as a CCD or CIS. The CCD is short for a 'Charge Coupled Device'. Further, the CIS is short for a 'Contact Image Sensor'. The image reading unit 10 generates image data according to the read image and outputs the generated image data to the image processing apparatus 100. The image data generated by the image reading unit 10 is hereinafter referred to as 'sheet image data'.

The control panel 20 functions as a user interface for receiving an operation input from the user. The control panel 20 is equipped with, for example, a touch screen consisting of integrated operation unit and display unit. The control panel 20 is connected with the image processing apparatus 100 in a communicable manner. The operation unit of the control panel 20 receives an action instruction of the image forming apparatus 1 according to an operation of the user. For example, the action instruction includes a scan function instruction indicating the reading of an image. Further, the action instruction includes a copy function instruction indicating the printing of an image obtained using a scan function on a sheet. Further, the action instruction may further include a fax function instruction. For example, the fax function refers to a function of sending an image obtained using a scan function to an external device via a network such as a telephone line.

The control panel 20 displays information for the user. For example, the display unit of the control panel 20 displays information indicating 'the sheet on the image reading unit 10 is a sheet the image of which is prohibited to be read'. For example, the sheet the image of which is prohibited to be read includes securities including banknote, check and bond. Further, for example, the sheet the image of which is prohibited to be read includes confidential files which are prohibited to be printed in an enterprise, a group, an organization and the like.

For example, the camera 30 is configured in the frame of the control panel 20. The camera 30 takes the image of a part of the body of the user operating the control panel 20. For example, the part of the body of the user refers to the face of the user. It is described herein that the camera 30 takes the image of the face of the user. Further, the camera 30 may also take the image of the whole body of the user, including the face of the user. The camera 30 generates image data based on the shot image. The image data generated by the camera 30 is hereinafter referred to as 'user image data'.

The body sensors 40-1 and 40-2 are sensors for detecting the location of a person. The location of a person includes location information indicating whether or not a person is in front of the image forming apparatus 1. Specifically, the body sensors 40-1 and 40-2 emit infrared ray, visible light or another light (electromagnetic wave) towards a specific direction. When the emitted light is reflected by an object such as a human body, the body sensors 40-1 and 40-2 receive the reflected light. The body sensor 40 generates a detection signal according to the reflected light received. Sequentially, the image processing apparatus 100 which is described later determines the existence of a human body according to the detection signal. The body sensors 40-1 and 40-2 may also be sensors for receiving the infrared ray emitted by an object such as a human body. The body sensors 40-1 and 40-2 may emit sound wave rather than light. The body sensors 40-1 and 40-2 may emit sound wave in combination with light. The body sensors 40-1 and 40-2 are hereinafter referred to as 'body sensor 40' for short, if not differentiated specifically. Further, it is described in the embodiment that two body sensors 40 are configured; however, the present invention is not limited to this. For example, the image forming apparatus 1 may be equipped with one body sensor 40 or more than two body sensors 40.

The image forming unit 50 forms an image on a sheet using a coloring agent such as toner or ink. Specifically, the image forming unit 50 forms an image according to the sheet image data read by the image reading unit 10 or the image data received from an external device. For example, the image forming unit 50 forms an image on a sheet in an inkjet manner, a laser manner or a thermal manner.

The image processing apparatus 100 is a computer for carrying out various kinds of image processing on the image data acquired. The structure of the image processing apparatus 100 is described below.

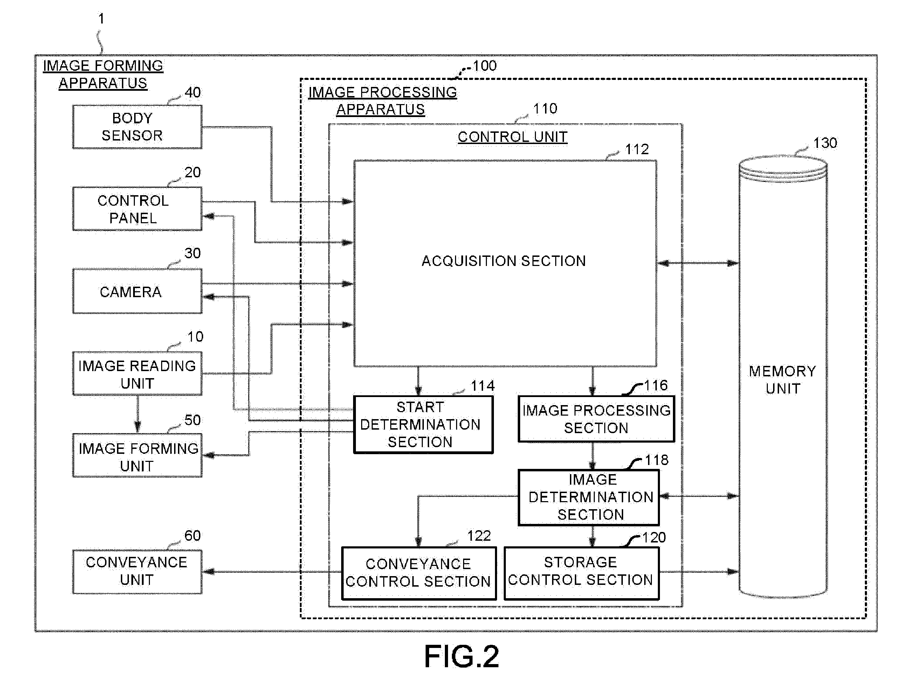

Fig. 2 is a diagram exemplifying the functional structure of an image forming apparatus 1 equipped with an image processing apparatus 100 according to embodiment 1.

The image processing apparatus 100 comprises a control unit 110 and a memory unit 130. The control unit 110 comprises an acquisition section 112, a start determination section 114, an image processing section 116, an image determination section 118, a storage control section 120 and a conveyance control section 122.

A part of or all of the function sections of the control unit 110 are software function sections which function through the execution of the programs stored in the memory unit 130 by a processor. For example, the processor is a Central Processing Unit (CPU). Further, a part of or all of the function sections of the control unit 110 are hardware function sections which are, for example, LSIs and ASICs. The LSI is short for a 'Large Scale Integration', and the ASIC is short for an 'Application Specific Integrated Circuit'.

The acquisition section 112 acquires a detection signal from the body sensor 40. Further, the acquisition section 112 acquires, from the control panel 20, a signal representing an operation input. The signal representing an operation input is hereinafter referred to as 'operation signal'.

Further, the acquisition section 112 acquires user image data from the camera 30 and sheet image data from the image reading unit 10. The acquisition section 112 may also acquire the user image data or the sheet image data from another apparatus via an interface (not shown).

After acquiring the signal and the image data, the acquisition section 112 temporarily stores the acquired signal and image data in the volatile memory medium of the memory unit 130.

The start determination section 114 determines whether or not the recovery from a standby mode occurs according to the detection signal acquired by the acquisition section 112. The standby mode represents a mode in which the functions of the image forming apparatus 1 are partially stopped while the image forming apparatus 1 is powered on. The standby mode is the so-called sleep mode or dormant mode. For example, in the standby mode, the image forming apparatus 1 stops the display on the display unit of the control panel 20.

For example, in the standby mode, the image forming apparatus 1 stops the camera 30. For example, in the standby mode, the actions needed by the image forming unit 50 to form an image are stopped. The actions refer to, for example, keeping the temperature of a specific device in the image forming unit 50 at a fixed temperature. That is, in the standby mode, the image forming apparatus 1 stops the temperature control of the image forming unit 50.

Specifically, the start determination section 114 determines whether or not the recovery from the standby state occurs as follows. If a detection signal is continuously generated by the body sensor 40 within a given period of time, the start determination section 114 determines the existence of a user in front of the image forming apparatus 1. If a detection signal is not continuously generated by the body sensor 40 within a given period of time, the start determination section 114 determines the absence of a user in front of the image forming apparatus 1.

After determining the existence of a user in front of the image forming apparatus 1, the start determination section 114 generates a recovery signal for recovering all the functions of the image forming apparatus 1. After determining the absence of a user in front of the image forming apparatus 1, the start determination section 114 generates no recovery signal. The start determination section 114 outputs the generated recovery signal to the functional sections in a standby state. Then, the functional sections in the standby state are recovered from the standby state to function. For example, the start determination section 114 causes the image forming unit 50 to start a temperature control in the case where image forming unit 50 in the standby state stops the temperature control. Further, the start determination section 114 causes the camera 30 to shoot an image in the case where the camera 30 in the standby mode stops shooting images.

The image processing section 116 carries out a processing of extracting a feature from the sheet image data acquired by the acquisition section 112. For example, the feature refers to a characteristic point in an image by means of which the brightness value or color of a certain pixel can be distinguished from surrounding pixels and the certain pixel can be positioned accurately.

For example, the image processing section 116 extracts a characteristic point from the sheet image data using a specific characteristic point extraction method which refers to an SUSAN operation. The SUSAN is short for 'Smallest Univalue Segment Assimilating Nucleus'. The specific characteristic point extraction method may also be a Harris operation or another method.

The image processing section 116 may extract a characteristic line representing a contour line (edge) rather than a characteristic point from sheet image data. For example, the image processing section 116 extracts a contour line (edge) using a Canny method or through a Hough Transformation processing.

The image processing section 116 may extract a characteristic quantity from the sheet image data. For example, the image processing section 116 extracts a characteristic quantity through an SIFT operation. The SIFT is short for a 'Scale-Invariant Feature Transform'.

The image processing section 116 compares the feature extracted from the sheet image data with the feature pre-extracted from the image data of a sheet the image of which is prohibited to be read. Here, the feature extracted from the sheet image data includes characteristic point, contour line (edge) or characteristic quantity. The image data of a sheet the image of which is prohibited to be read is hereinafter referred to as 'prohibited image data'.

For example, the image processing section 116 carries out a template matching processing for the sheet image data by using the feature of the prohibited image data as a template. The image processing section 116 two-dimensionally scans a template image of a specific size from the sheet image data. In this case, the image processing section 116 calculates the similarity of an area where the template image is overlapped with the sheet image data when scanning the template image. For example, the similarity is the correlation value or the normalized correlation value of the template image and the sheet image data.

The image determination section 118 determines whether or not the sheet image data is prohibited image data according to whether or not the similarity is greater than a threshold. That is, the image determination section 118 determines whether or not a sheet serving as the generation source of sheet image data is a sheet the image of which is prohibited to be read. Further, the image determination section 118 determines whether or not the sheet image data is prohibited image data according to whether or not the similarity is smaller than a threshold.

For example, the image determination section 118 determines that the sheet image data is prohibited image data if the similarity is greater than the threshold. The image determination section 118 determines that the sheet image data is not prohibited image data if the similarity is smaller than the threshold.

In the case where the image determination section 118 determines that the sheet image data is prohibited image data, the storage control section 120 carries out the following processing: the storage control section 120 stores the sheet image data which is prohibited image data in the memory unit 130 in correlation with the user image data acquired by the acquisition section 112. The data causing the sheet image data to correspond to the user image data is hereinafter referred to as 'corresponding data'. For example, the storage control section 120 stores the corresponding data in the non-volatile memory medium of the memory unit 130.

Further, in the case where the image determination section 118 determines that the sheet image data is prohibited image data, the storage control section 120 outputs alarm information to the control panel 20. The alarm information is the information indicating that the sheet is a sheet the image of which is prohibited to be read.

If the operation signal acquired by the acquisition section 112 includes information indicating a copy function instruction, the conveyance control section 122 carries out the following processing: the conveyance control section 122 controls a conveyance section 60 to convey a sheet stored in a specific area (not shown) in the image forming apparatus 1 towards the image forming unit 50. For example, the conveyance section 60 comprises a roller for picking up sheets one by one from a sheet storage position and a belt on which the sheet is held and conveyed. The conveyance section 60 may further comprise a motor for driving the roller or belt. thus, the image forming unit 50 forms an image on the sheet conveyed by the conveyance section 60.

The memory unit 130 has a non-volatile memory medium and a volatile memory medium. That is, the memory unit 130 has a semi-persistent storage area and a temporary storage area. For example, the non-volatile memory medium (semi-persistent storage area) is an ROM, a flash memory or an HDD. The ROM is short for a 'Read Only Memory'. The HDD is short for a 'Hard Disk Drive'. For example, the volatile memory medium (temporary storage area) is an RAM or a register. The RAM is short for a 'Random Access Memory'. The information stored in the memory unit 130 includes detection signal, operation signal, user image data, prohibited image data and corresponding data.

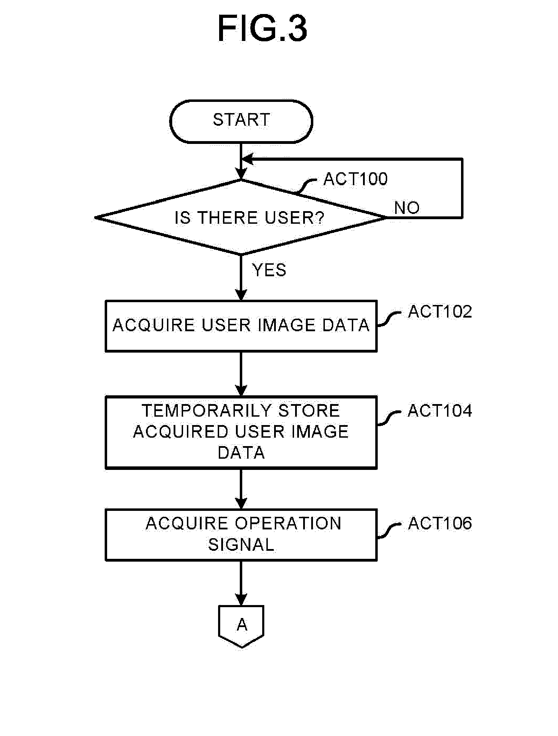

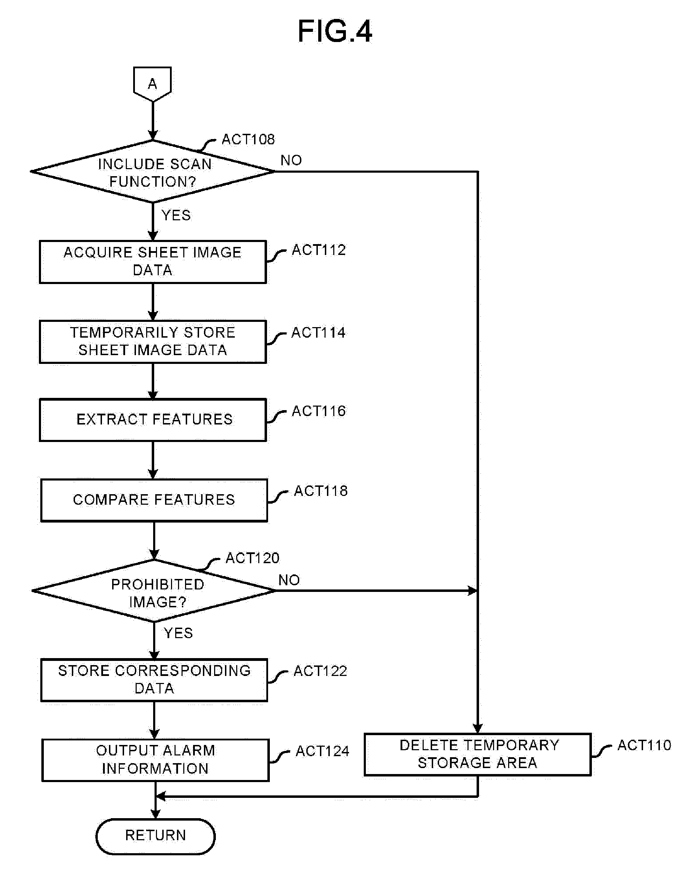

The flow of the actions of the image processing apparatus 100 of embodiment 1 is described below with reference to Fig. 3 and Fig. 4. Fig. 3 and Fig. 4 are flowcharts exemplifying a part of the actions of the image processing apparatus 100 according to embodiment 1. For example, according to embodiment 1, the image processing apparatus 100 carries out the processing shown in the flowcharts of Fig. 3 and Fig. 4 every a certain period of time.

First, the start determination section 114 determines whether or not there is a user according to a detection signal generated by the body sensor 40 (Act 100). The user refers to a person who is in front of the image forming apparatus 1 and operates the control panel 20. If there is no user (Act 100: No), the start determination section 114 generates no recovery signal and maintains the current status.

If there is a user (Act 100: Yes), the start determination section 114 generates a recovery signal to recover all the functions of the image forming apparatus 1. Sequentially, the acquisition section 112 acquires user image data from the camera 30 (Act 102). The acquisition section 112 temporarily stores the acquired user image data in the volatile memory medium of the memory unit 130 (Act 104).

Next, the acquisition section 112 acquires an operation signal from the control panel 20(Act 106). The image processing apparatus 100 of the embodiment may carry out the processing of Act 106 prior to the processing of Act 102 or synchronously carry out the processing of Act 106 and the processing of Act 102.

Then, the image processing apparatus 100 determines whether or not the operation signal acquired by the acquisition section 112 includes a scan function instruction (Act 108). After determining that the operation signal acquired by the acquisition section 112 includes no scan function instruction (Act 108: No), the image processing apparatus 100 deletes the information in the memory unit 130 (Act 110). That is, the image processing apparatus 100 deletes the user image data stored in the volatile memory medium. Then, the image processing apparatus 100 of embodiment 1 ends the processing shown in the flowchart.

After determining that the operation signal acquired by the acquisition section 112 includes a scan function instruction (Act 108: Yes), the acquisition section 112 carries out the subsequent processing. The acquisition section 112 acquires sheet image data from the image reading unit 10 (Act 112). Next, the acquisition section 112 temporarily stores the acquired sheet image data in the volatile memory medium of the memory unit 130 (Act 114).

Sequentially, the image processing section 116 carries out a processing of extracting features from the sheet image data acquired by the acquisition section 112 (Act 116) . Then, the image processing section 116 compares the features extracted from the sheet image data with the features pre-extracted from the prohibited image data. The image processing section 116 calculates a similarity according to the result of the comparison (Act 118).

Next, the image determination section 118 determines whether or not the sheet image data is the prohibited image data according to the similarity calculated by the image processing section 116 (Act 120).

If the sheet image data is not the prohibited image data (Act 120: No), the image processing apparatus 100 deletes the information in the memory unit 130 (Act 110). That is, the image processing apparatus 100 deletes the user image data and the sheet image data stored in the volatile memory medium. Then, the image processing apparatus 100 of embodiment 1 ends the processing shown in the flowchart.

If the sheet image data is the prohibited image data (Act 120: Yes), the storage control section 120 stores corresponding data in the memory unit 130 (Act 122). The corresponding data is stored in the non-volatile storage medium in the memory section 130. Sequentially, the storage control section 120 outputs alarm information to the control panel 20 (Act 124) . Then, the image processing apparatus 100 of embodiment 1 ends the processing shown in the flowchart. Further, if the operation signal includes a copy function instruction, then the image processing apparatus 100 carries out a specific action after completing processing of Act 124. The specific action refers to a copy action.

According to the foregoing image processing apparatus 100 of embodiment 1, the acquisition section 112 is capable of acquiring both user image data and sheet image data. The image determination section 118 determines whether or not the sheet read by the image reading unit 10 is a sheet prohibited to be read according to the acquired sheet image data and prohibited image data. After the sheet read by the image reading unit 10 is determined to be a sheet prohibited to be read, the storage control section 120 stores the sheet image data of the sheet in the memory unit 130 in correlation with the acquired user image data. As a result, the image processing apparatus 100 is capable of identifying the user reading the image of a sheet prohibited to be read.

Next, the image processing apparatus 100 of embodiment 2 is described below. The image processing apparatus 100 of embodiment 2 is different from that of embodiment 1 in the following aspect. This aspect resides in user pre-registration. The following description is centralized on this aspect, and description of the parts of the image processing apparatus 100 of embodiment 2 which are identical those of the processing apparatus 100 of embodiment 1 are omitted.

For example, user image data is at least stored in the non-volatile memory medium of the memory unit 130 in advance as user registration information. For example, information representing attributes of a user is stored in the non-volatile memory medium of the memory unit 130 in advance as user registration information. The information representing attributes of a user includes the name, the telephone number, the relationship, the location or the IP address of the user. The information representing attributes of a user is hereinafter referred to as 'user attributes'.

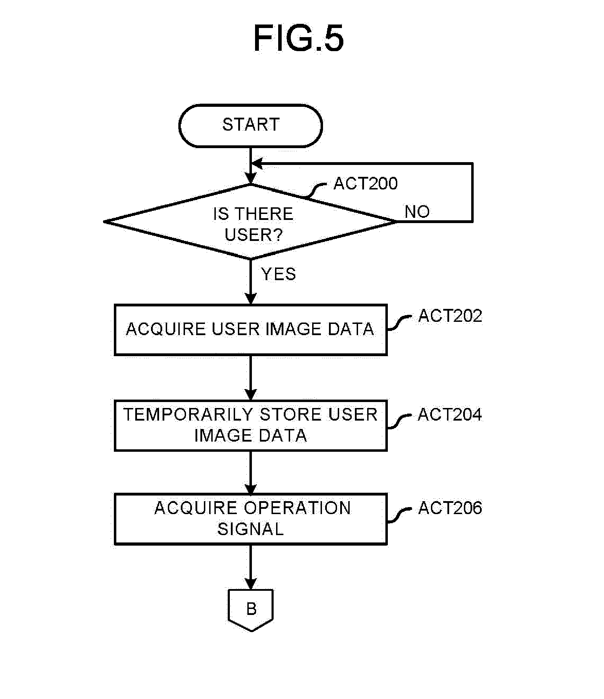

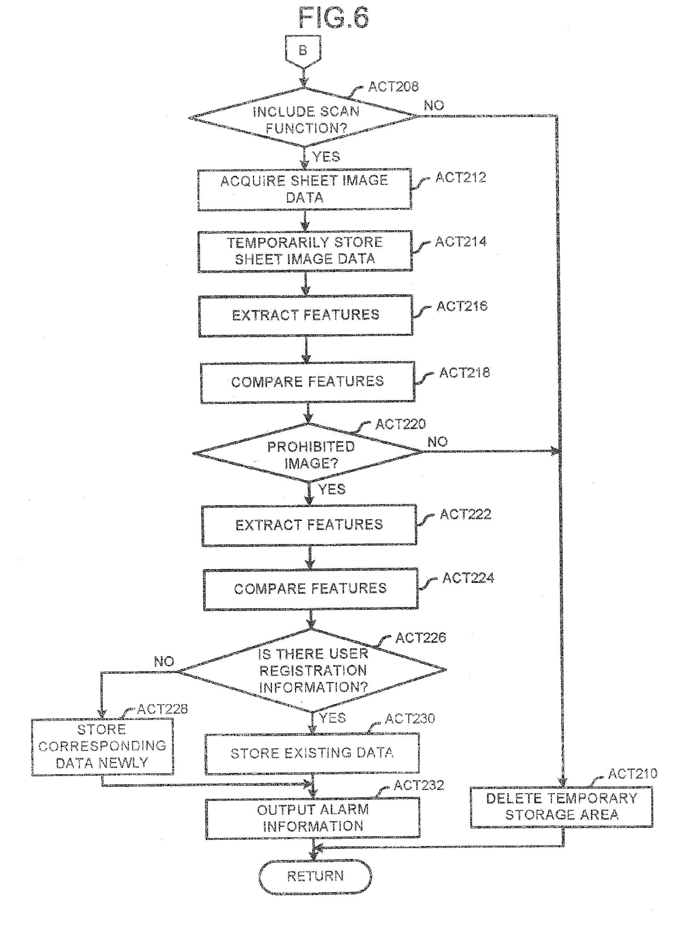

The flow of the actions of the image processing apparatus 100 of embodiment 2 is described below with reference to Fig. 5 and Fig. 6. Fig. 5 and Fig. 6 are flowcharts exemplifying a part of the actions of the image processing apparatus 100 of embodiment 2.

First, the start determination section 114 determines whether or not there is a user in front of the image forming apparatus 1 according to a detection signal generated by the body sensor 40 (Act 200). If there is no user in front of the image forming apparatus 1 (Act 200: No), the start determination section 114 generates no recovery signal and maintains the current state.

If there is a user in front of the image forming apparatus 1 (Act 200: Yes), the start determination section 114 generates a recovery signal to recover all the functions of the image forming apparatus 1. Next, the acquisition section 112 acquires user image data from the camera 30 (Act 202). The acquisition section 112 temporarily stores the acquired user image data in the volatile memory medium of the memory unit 130 (Act 204).

Sequentially, the acquisition section 112 acquires an operation signal from the control panel 20 (Act 206) . Further, the image processing apparatus 100 of embodiment 2 may carry out the processing of Act 206 prior to the processing of Act 202 or synchronously carry out the processing of Act 206 and the processing of Act 202.

Next, the image processing apparatus 100 determines whether or not the operation signal acquired by the acquisition section 112 includes a scan function instruction (Act 208). After determining that the operation signal includes no scan function instruction (Act 208: No), the image processing apparatus 100 deletes the information in a temporary memory area (Act 210). That is, the image processing apparatus 100 deletes the user image data stored in the volatile memory medium. Then, the image processing apparatus 100 of embodiment 2 ends the processing shown in the flowchart.

After determining that the operation signal includes a scan function instruction (Act 208: Yes), the acquisition section 112 acquires sheet image data from the image reading unit 10 (Act 212). Next, the acquisition section 112 temporarily stores the acquired sheet image data in the volatile memory medium of the memory unit 130 (Act 214).

Sequentially, the image processing section 116 carries out a processing of extracting features from the sheet image data acquired by the acquisition section 112 (Act 216).

Then, the image processing section 116 compares the features extracted from the sheet image data with the features pre-extracted from the prohibited image data. The image processing section 116 calculates a similarity according to the result of the comparison (Act 218).

Next, the image determination section 118 determines whether or not the sheet image data is the prohibited image data according to the similarity calculated in Act 218 (Act 220) .

After determining that the sheet image data is not prohibited image data (Act 220: No), the image processing apparatus 100 deletes the information stored in the memory unit 130 (Act 210). That is, the image processing apparatus 100 deletes the user image data and the sheet image data stored in the volatile memory medium. Then, the image processing apparatus 100 of embodiment 2 ends the processing shown in the flowchart.

After determining that the sheet image data is the prohibited image data (Act 220: Yes), the image processing section 116 carries out the subsequent processing. The image processing section 116 extracts features from the user image data acquired by the acquisition section 112 (Act 222).

Then, the image processing section 116 compares the features extracted from the user image data with the features of the user image data included in the user registration information. The image processing section 116 calculates a similarity according to the result of the comparison (Act 224) .

Next, the image determination section 118 determines whether or not there is user registration information of the user according to the similarity calculated in Act 224 (Act 226). That is, the image determination section 118 determines whether or not there is user registration information of the user photographed by the camera 30.

If there is no user registration information (Act 226: No), the storage control section 120 newly stores corresponding data in the memory unit 130 (Act 228). The corresponding data is stored in the non-volatile storage medium of the memory section 130 through Act 228. If there is user registration information (Act 226: Yes), the storage control section 120 adds the corresponding data in existing user registration information. The storage control section 120 stores the corresponding data added in the existing user registration information in the memory unit 130 (Act 230) . The corresponding data is stored in the non-volatile storage medium of the memory section 130 through Act 230.

Sequentially, the storage control section 120 outputs alarm information to the control panel 20 (Act 232) after Act 228 or Act 230. Then, the image processing apparatus 100 of embodiment 2 ends the processing shown in the flowchart.

According to the foregoing image processing apparatus 100 of embodiment 2, user image data is compared with the user image data included in pre-stored user registration information. As a result, the image processing apparatus 100 is capable of identifying more detailed information of the user reading the image of a sheet prohibited to be read.

Next, the image processing apparatus 100 of embodiment 3 is described below. The image processing apparatus 100 of embodiment 3 is different from that of embodiment 1 in the following aspect. The aspect resides in the limitation to the functions available to each user. The following description is centralized on this aspect, and description of the parts of the image processing apparatus 100 of embodiment 3 which are identical those of the processing apparatuses 100 of embodiment 1 and embodiment 2 is omitted.

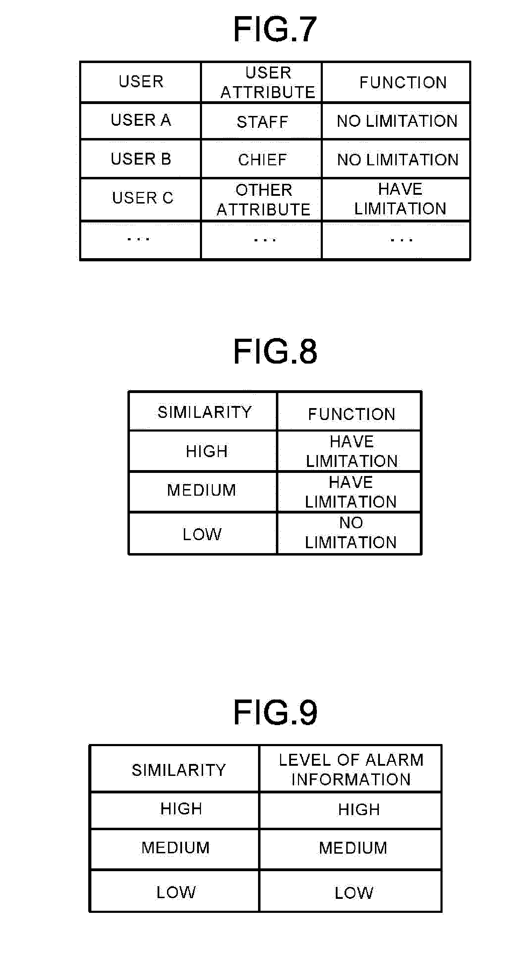

Fig. 7 is a diagram illustrating a part of the limitations imposed to functions based on attributes of each user. For example, in embodiment 3, user attribute and a function limitation corresponding to the user attribute are included in user registration information. In the example shown in Fig. 7, if information includes a copy function instruction, the image processing apparatus 100 allows users A and B to use a copy function. Further, the image processing apparatus 100 prevents user C from using a copy function. Specifically, in the case where the sheet image data is determined to be prohibited image data, the image processing apparatus 100 stops controlling the conveyance section 60. As a result, in the image forming apparatus 1, no sheets are fed to the image forming unit 50 for the formation of an image. Further, the user attribute may be set independently for each user or for each specific group. For example, the specific group is a set of departments in an enterprise or a set of institutions.

According to the image processing apparatus 100 of embodiment 3, when the sheet image data is prohibited image data, the functions of the image processing apparatus 100 are partially or completely limited for a specific user.

Next, the image processing apparatus 100 of embodiment 4 is described below. The image processing apparatus 100 of embodiment 4 is different from that of embodiment 1 in the following aspect. The aspect resides in the limitation imposed to functions based on the similarity value of sheet image data. The following description is centralized on this aspect, and description of the parts of the image processing apparatus 100 of embodiment 4 which are identical those of the processing apparatuses 100 of embodiments 1-3 is omitted.

Fig. 8 is a diagram exemplifying a method of imposing function limitations in the case where similarity is classified into three levels. In the case shown in Fig. 8, the image processing apparatus 100 limits a part of or all of the functions in the image forming apparatus 1 if the value of the similarity is high or intermediate. The image processing apparatus 100 imposes no limitation to the functions in the image forming apparatus 1 if the value of the similarity is low. In this way, the image processing apparatus 100 limits the functions available to a user according to the similarity of sheet image data and prohibited image data.

Further, the image processing apparatus 100 of embodiment 4 may also change the content of alarm information according to the value of the similarity.

Fig. 9 is a diagram exemplifying the levels of alarm information in the case where the similarity is classified into three levels. In the example shown in Fig. 9, the alarm level is set to be high when the value of the similarity is high. In this case, if the action of the user is determined to be a prohibited action, the image processing apparatus 100 outputs severe information indicating 'please refrain from the action' as alarm information. Further, in the example shown in Fig 9, the alarm level is set to be intermediate when the value of the similarity is intermediate. In this case, the image processing apparatus 100 outputs information indicating 'the action of the user is highly likely to be a prohibited action' as alarm information. Further, in the example shown in Fig 9, the alarm level is set to be low when the value of the similarity is low. In this case, the image processing apparatus 100 outputs no alarm information.

In this way, the image processing apparatus 100 can select the content of the output alarm information according to a sheet read by the image reading unit 10 under the instruction of the user. Further, in the foregoing embodiment 4, the similarity is classified into three levels; however, the present invention is not limited to this, for example, the similarity may be classified into two or more than four levels.

According to the image processing apparatus 100 of embodiment 4, the functions available to a user are limited according to the similarity of sheet image data and prohibited image data.

Further, according to the image processing apparatus 100 of embodiment 4, the content of the output alarm information can be selected according to a sheet read by the image reading unit 10 under the instruction of the user.

Other embodiments (variations) are described below.

The image forming apparatus 1 may also be started according to a signal generated by a power switch (no shown) under the control of the start determination section 114 rather than a detection signal generated by the body sensor 40. For example, the power switch is operated by the user. The power switch generates a signal according to the operation of the user.

Further, when the control panel 20 is in a standby state, the start determination section 114 may also start the image forming apparatus 1 using an operation signal generated during the initial operation. For example, the start determination section 114 starts the image forming apparatus 1 according to a signal operated when the display unit of the control panel 20 is darkened.

When corresponding data is stored in the non-volatile memory medium of the memory unit 130, the storage control section 120 may also store information including the date on which the sheet image data is acquired.

Further, when alarm information is output to the control panel 20, the storage control section 120 may synchronously output information indicating the storage of corresponding data.

Further, the storage control section 120 may further encrypt the corresponding data and store the encrypted corresponding data in the non-volatile memory medium of the memory unit 130. For example, the encryption is implemented using a cryptographic technique based on RSA password or another symmetric key.

Further, the image processing apparatus 100 may also encrypt a storage area in which the corresponding data is stored.

It is described In embodiments 1-4 that the face, which is a part of the body of a user, is photographed by the camera 30 to generate user image data; however, the present invention is not limited to this. For example, the camera 30 may also photograph the fingers of the user to generate user image data. For example, the camera 30 photographs the fingers of the user when the user operates the control panel 20. The image processing section 116 extracts a fingerprint from the user image data of the finger of the user to authenticate the user.

The camera 30 for photographing the fingers of the user may also be arranged in the liquid crystal of the touch panel of the control panel 20 so that the camera 30 photographs the fingers of the user when the operation of the user is accepted by the control panel 20.

Further, the functions of the image processing apparatuses 100 of the foregoing embodiments are partially realized by a computer. In this case, programs for realizing these functions are recorded in a computer-readable recording medium. Moreover, these functions may be realized by causing a computer system to read and execute the programs recorded in a recording medium in which the programs are stored. Further, it is assumed that the 'computer system' includes hardware such as an operating system or a piece of peripheral equipment. Further, the 'computer-readable recording medium' refers to a removable medium, a memory device and the like. For example, the movable medium is a floppy disk, a compact disk, an ROM or a CD-ROM. For example, the memory device is a hard disc built in a computer system. Further, the 'computer-readable recording medium' refers to a medium which dynamically stores a program within a short period, such as a communication line for sending a program via a communicate route. The communication line is, for example, a telephone line or a network such as the Internet. Further, the 'computer-readable recording medium' may also be a volatile memory inside the computer system of a server or client. The volatile memory stores a program within a given period of time. Further, the foregoing program may also be a program for realizing a part of the foregoing functions. Further, the foregoing programs may be a combination of programs in a computer system in which the foregoing functions are recorded.

According to at least one of the foregoing embodiments, the acquisition section 112 acquires both user image data and sheet image data. The image determination section 118 determines whether or not the sheet read by the image reading unit 10 is a sheet prohibited to be read according to the acquired sheet image data and prohibited image data. After the sheet read by the image reading unit 10 is determined to be a sheet prohibited to read, and the storage control section 120 stores the sheet image data of the sheet in the memory unit 130 in correlation with the acquired user image data. As a result, the image processing apparatus 100 is capable of identifying the user reading the image of a sheet prohibited to be read.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. An image forming apparatus, comprising:
a camera configured to take the image of a part of or the whole body of a user to generate image data of the user;
a reading unit configured to read the image of a sheet and generate image data of the sheet;
a memory unit; and
a control unit configured to determine, according to the image data of the sheet and specific image data, whether or not the sheet read by the reading unit is a sheet the image of which is prohibited to be read and store the image data of the sheet and the image data of the user in the memory unit after determining that the sheet is a sheet the image of which is prohibited to be read.

2. The image forming apparatus according to claim 1,
wherein
the control unit outputs information indicating that the sheet is a sheet the image of which is prohibited to be read after determining that the sheet read by the reading unit is a sheet the image of which is prohibited to be read.

3. The image forming apparatus according to claim 1,
wherein
the control unit determines, according to the image data of the users included in user registration information related to predetermined users and the image data of the user, whether or not the user photographed by the camera is a user included in the user registration information; and
after determining that the user photographed by the camera is a user included in the user registration information, the control unit carries out a control to store the image data of a sheet determined to be a sheet the image of which is prohibited to be read and the user registration information in the memory unit.

4. The image forming apparatus according to claim 3,
wherein
the user registration information includes the image data of the user generated by photographing a part of or the whole body of the user and information representing attributes of the user.

5. The image forming apparatus according to claim 3,
wherein
after determining that the sheet read by the reading unit is a sheet the image of which is prohibited to be read, the control unit outputs information indicating that the sheet is a sheet the image of which is prohibited to be read according to information representing the attributes of the user included in the user registration information.

6. The image forming apparatus according to claim 1,
wherein
the control unit deletes the image data of the user and the image data of the sheet after determining that the sheet is not a sheet the image of which is prohibited to be read.

7. The image forming apparatus according to claim 1, further comprising;
an image processing unit configured to extract features from the image data of the sheet, compare the extracted features with the features pre-extracted from the specific image data and calculate the similarity of the image data of the sheet and the specific image data, wherein
the control unit determines whether or not the sheet is a sheet the image of which is prohibited to be read according to the similarity calculated by the image processing unit.

8. The image forming apparatus according to claim 1,
wherein
the control unit encrypts the memory unit in which the image data of a sheet determined to be a sheet the image of which is prohibited to be read and the image data of the user are stored.

9. The image forming apparatus according to claim 1,
wherein
the control unit carries out a control to encrypt the image data of a sheet determined to be a sheet the image of which is prohibited to be read and the image data of the user and store the image data of the sheet and the image data of the user in the memory unit.

10. An image processing method, comprising:
taking an image of a part of or the whole body of a user to generate image data of the user;
reading the image of a sheet and generate image data of the sheet;
determining, according to the image data of the sheet and specific image data, whether or not the sheet read at the reading step is a sheet the image of which is prohibited to be read; and
storing the image data of the sheet and the image data of the user after determining that the sheet is a sheet the image of which is prohibited to be read.

11. The image processing method according to claim 10, comprising outputting information indicating that the sheet is a sheet the image of which is prohibited to be read after determining that the sheet read at the reading step is a sheet the image of which is prohibited to be read.

12. The image processing method according to claim 10 or 11, further comprising determining, according to the image data of the users included in user registration information related to predetermined users and the image data of the user, whether or not the user photographed by the camera is a user included in the user registration information; and
after determining that the photographed user is a user included in the user registration information, carrying out a control to store the image data of a sheet determined to be a sheet the image of which is prohibited to be read and the user registration information.

13. The image processing method according to claim 12, wherein:
the user registration information includes the image data of the user generated by photographing a part of or the whole body of the user and information representing attributes of the user; and
after determining that the sheet read at the reading step is a sheet the image of which is prohibited to be read, outputting information indicating that the sheet is a sheet the image of which is prohibited to be read according to information representing the attributes of the user included in the user registration information.

14. The image processing method according to any one of claims 10 to 13, further comprising deleting the image data of the user and the image data of the sheet after determining that the sheet is not a sheet the image of which is prohibited to be read.

15. The image processing method according to any one of claims 10 to 14 further comprising:
extracting features from the image data of the sheet;
comparing the extracted features with the features pre-extracted from the specific image data;
calculating the similarity of the image data of the sheet and the specific image data; and
determining whether or not the sheet is a sheet the image of which is prohibited to be read according to the similarity calculated at the calculating step.
